# EUROPÄISCHE PATENTANMELDUNG

(11) **EP 2 586 848 A1**
(43) Veröffentlichungstag der Anmeldung: **01.05.2013**
(21) Anmeldenummer: 11187113.3
(22) Anmeldetag: 28.10.2011
(51) Int. Cl.: C09K 21/02

(54) **Brandschutzmasse**

(71) Anmelder: Franken Plastik GmbH, 90763 Fürth (DE)
(72) Erfinder: Thomae, Walter, 90542 Eckental (DE)
(74) Vertreter: Schröer, Gernot H.

(57) **Zusammenfassung**

Die Erfindung betrifft eine Brandschutzmasse umfassend
- 18,52 Gew.-% bis 54,29 Gew.-% wässrige Dispersion aus Vinylacetat und Ethylen
- 9,45 Gew.-% bis 20,96 Gew.-% expandierbaren Graphit, der im Brandfalle bei einer vorgegebenen Temperatur oder in einem vorgegebenen Temperaturbereich, insbesondere zwischen 120 °C und 160 °C, vorzugsweise zwischen 130 °C und 150 °C, expandiert,
- 3,71 Gew.-% bis 24,75 Gew.-% Füllstoff, insbesondere mineralischen Füllstoff
- 0,00 Gew.-% bis 68,32 Gew.-% Zusatz- oder Hilfsstoffe, insbesondere Expansionsförderer zum Fördern der Expansion des Graphits, Homogenisierungsmittel, Weichmacher und/oder Fließverbesserer.

## Beschreibung

### Die Erfindung betrifft eine Brandschutzmasse.

Brandschutzmassen werden eingesetzt, um Zwischenräume, insbesondere Fugen, zwischen Bauteilen, beispielsweise an Wänden, Fenstern, Türen, Böden oder Rohren, abzudichten und im Brandfalle eine Brandbarriere zu bilden.

Brandschutzmassen umfassen in der Regel blähfähige Substanzen, die unter Hitzeeinwirkung aufschäumen oder expandieren, und Bindemittel. Die Brandschutzmasse wird in pastöser Form auf- oder eingebracht und bildet dann durch ein nachfolgendes Austrocknen eine branddichte Masse unterschiedlicher Konsistenz und unterschiedlicher Härte bzw. Restelastizität je nach Art der Zusammensetzung und nachfolgenden Reaktion oder Abbindeprozess beim Austrocknen.

WO 03/064801 A1 offenbart eine Brandschutzdichtung zum Einsetzen in Rahmen mit einer rohrförmigen Hülle und einer Brandschutzmischung innerhalb der Hülle, die im Brandfalle expandiert und eine wässrige Lösung aus Alkalimetall-Polysilicat und colloidalem Silica umfasst. Die Hülle kann insbesondere aus einem extrudierten thermoplastischen Brandschutzmaterial mit wenigstens einem thermoplastischen Kunststoff, expandierendem Graphit und wenigstens einem flammenverzögernden Zusatz bestehen.

US 4,872,914 A offenbart eine Rohrgewindeabdichtpaste zum Abdichten von Rohrschraubverbindungen in Kernkraftwerken bei hohen Brandtemperaturen von 500 °C, welche Paste 30 Gew-% bis 80 Gew.-% nicht expandierten natürlich geflockten Graphit und einen flüssigen Träger aus Mineralöl und Petrolatum (Vaseline) umfasst. Eine solche Paste ist beispielsweise in Wohngebäuden nicht einsetzbar und schlecht zu verarbeiten.

Der Erfindung liegt die Aufgabe zugrunde, eine neue Brandschutzmasse anzugeben, die gut verarbeitbar ist und auch in Wohngebäuden eingesetzt werden kann.

Diese Aufgabe gemäß der Erfindung wird gelöst mit den Merkmalen des Patentanspruchs 1. Vorteilhafte Ausgestaltungen und Weiterbildungen ergeben sich aus den abhängigen Patentansprüchen.

Die wesentlichen Bestandteile der Brandschutzmasse gemäß der Erfindung sind einerseits eine Ausgangsmischung aus Vinylacetat und Ethylen in einer wässrigen Dispersion in einem gravimetrischen Anteil von 18,52 Gew.-% bis 54,29 Gew.-%, die als Bindemittel in der Brandschutzmasse oder als Bindemittelmatrix in der getrockneten Masse vorgesehen ist, und andererseits ein expandierbarer Graphit mit einem Anteil von 9,45 Gew.-% bis 20,96 Gew.-% andererseits, wobei der Graphit im Brandfalle bei oder ab einer vorgegebenen Temperatur oder in einem vorgegebenen Temperaturbereich, die bzw. der insbesondere zwischen 120 °C und 160 °C, vorzugsweise zwischen 130 °C und 150 °C, liegt, expandiert. ,

Bei der Brandschutzmasse gemäß der Erfindung handelt es sich also insbesondere um eine intumeszierende Brandschutzmasse auf einer wässrigen Dispersionsbasis, die insbesondere auch frei von Lösungsmittel ausgestaltet werden kann oder ist.

Des weiteren umfasst die Brandschutzmasse gemäß Patentanspruch 1 einen Anteil von 3,71 Gew.-% bis 24,75 Gew.-% eines, vorzugsweise mineralischen, Füllstoffes.

Schließlich umfasst die Brandschutzmasse gemäß Patentanspruch 1 vorzugsweise auch für die Verarbeitbarkeit oder auch Eigenschaften der Masse förderliche Zusatz- oder Hilfsstoffe, insbesondere Expansionsförderer zum Fördern der Expansion des Graphits, Homogenisierungsmittel, Weichmacher und/oder Fließverbesserer, mit einem Anteil von 0,00 Gew.-% bis 68,32 Gew.-%

Die angegebenen Prozentsätze Gew.-% sind Gewichtsprozente oder Massenprozente und bezogen auf die Gesamtmasse oder Gesamtgewicht der Brandschutzmasse, die 100 Gew.-% entspricht.

In einer besonders vorteilhaften Ausführungsform ist ein Expansionshilfsstoff oder Expansionsförderer zur Förderung der Expansion des Graphits zugesetzt, vorzugsweise 6,32 Gew.-% bis 13,68 Gew.-% Diaminphosphat, insbesondere Ethylendiaminphosphat, welches im Brandfalle die Expansion des Graphits fördert oder unterstützt.

In einer vorteilhaften Ausführungsform der Brandschutzmasse ist als wenigstens ein Füllstoff eine Glasfrittenmischung oder auch eine Mischung aus Glasmehl vorgesehen, insbesondere in einem gravimetrischen Anteil zwischen 6,83 Gew.-% und 16,02 Gew.-%. Diese Glasfrittenmischung schmilzt insbesondere im Brandfalle und hat insbesondere einen Schmelzpunkt im Bereich von ungefähr 600 °C bis 700 °C. Dadurch trägt die Glasfrittenmischung im Brandfalle zusätzlich zur Abdichtung und zum Zusammenhalt der Brandschutzmasse bei.

In einer weiteren Ausgestaltung der Brandschutzmasse ist als (mineralischer) Füllstoff zusätzlich zur Glasfrittenmischung oder auch ohne diese wenigstens einer oder eine Mischung der folgenden Stoffe vorgesehen: Quarz, Glimmer, Aluminiumsilikathydrat (Kaolin), insbesondere in einem Anteil zwischen 3,71 Gew.-% und 7,64 Gew.-%.

Ferner kann, insbesondere als Fließverbesserer, 0,25 Gew.-% bis 2,34 Gew.-% Aluminiumdistearat in der Brandschutzmasse enthalten sein.

Wenn eine besondere Elastizität gewünscht ist, wird der Brandschutzmasse bevorzugt wenigstens ein Weichmacher zugesetzt.

Bevorzugt umfasst die Brandschutzmasse, insbesondere als Weichmacher und/oder zur Viskositätserhöhung, 0,89 Gew.-% bis 2,47 Gew.-% Natriumsalz in Polyacrylsäure und/oder, insbesondere als Weichmacher, 1,06 Gew.-% bis 4,65 Gew.-% Diisononyphtalat.

Um eine Verkrustung, Verstärkung oder Erhöhung der mechanischen Festigkeit zu erreichen, kann der Brandschutzmasse 1,62 Gew.-% bis 3,82 Gew.-% Verstärkungsmittel, insbesondere Glasfasern, und/oder 2,03 Gew.-% bis 4,22 Gew.-% Ammonium, insbesondere als Verhärter, zugesetzt sein.

Außerdem kann die Brandschutzmasse 22 Gew.-% bis 6,84 Gew.-% Cellulose, insbesondere Carboxymethylcellulose, mit Natriumsalz umfassen, insbesondere als Verdickungsmittel oder zum Einstellen der Konsistenz der Brandschutzmasse.

Weiterhin kann 0,92 Gew.-% bis 4,13 Gew.-% Alkylphenolthoxylat in der Brandschutzmasse enthalten sein, insbesondere als Homogenisierungsmittel und/oder zur Verbesserung der Homogenität der Brandschutzmasse.

Der expandierbare Graphit kann in Schwefelsäure gereinigt sein und/oder eine Schwefelsäureeinlage aufweisen. Damit erreicht man eine hohe Reinheit des Graphits und ein besseres Brandschutzverhalten. Bevorzugt ist der Graphit ein Blähgraphit.

Beim Trocknen der Brandschutzmasse (oder: beim oder unter Verdunsten des Wassers) binden das Vinylacetat und Ethylen ab und bilden eine elastische Bindemitttelmatrix für den Graphit. Im Brandfalle schäumt die Brandschutzmasse auf und der Graphit als blähfähige oder expandierende Substanz kann aufgrund seiner Expansion, die ein Vielfaches, der sogenannte Schäum- oder Expansionsfaktor, des ursprünglichen Volumens betragen kann, den von der Brandschutzmasse auszufüllenden Raum oder Zwischenraum dicht halten und einen Austritt von Rauch oder Flammen durch diesen Raum oder Zwischenraum verhindern.

Mit der Brandschutzmasse gemäß der Erfindung können insbesondere die folgenden Spezifikationen erreicht werden:
● Dichte von 1350 kg/m³ ± 15 %
● Nichtflüchtige Anteile zwischen 73 % und 83 % (geprüft bei 105 °C über 3 h)
● Masseverlust durch Erhitzen zwischen 48 % und 58 % (geprüft bei 550 °C über 30 Minuten)
● Schaumfaktor (oder: Expansionsfaktor, relative Volumenänderung im Brandfalle) zwischen 14,0 und 24,0 (geprüft an ca. 4 mm dicken Proben bei 550 °C über 30 min. mit Gewichtsauflage)
● Blähdruck zwischen 0,85 N/mm² (entspricht 8,5 bar) und 1,60 N/mm² (entspricht 16 bar) jeweils geprüft bei 300 °C gemäß Verfahren A³

Die Brandschutzmasse gemäß der Erfindung kann für die verschiedensten Brandabschottungen verwendet werden, insbesondere als Spachtelmasse oder auch bereits in Formen verpresst und getrocknet bzw. abbindet oder vernetzt, also als Formteile, oder auch in Form von Laminaten oder dergleichen.

Die Brandschutzmasse kann im Prinzip in beliebigen Anwendungen zum Einsatz kommen, beispielsweise zum Verfüllen von Laibungen, zum Brandschutz von brennbaren oder auch nicht brennbaren Rohren oder Kabeln, Kabellehrrohren oder Kabelbündeln, für Fenster oder Türen und Fassaden, jedoch auch im Schiffsbau oder bei Plattformen und anderen Anwendungen in der Industrie, insbesondere Bauindustrie.

Die Brandschutzpaste oder -masse gemäß der Erfindung hat den Vorteil, dass sie schnell und kostengünstig montiert werden kann, rauchdicht und feuerdicht ist, darüber hinaus wasserresistent und salzsprühnebelresistent ist und für den Außenbereich geeignet ist, sowie auch mit der nötigen Elastizität ausgebildet sein kann. Darüber hinaus ist die Masse mit Farbe überstreichbar.

## Patentansprüche

**1.** Brandschutzmasse umfassend
- 18,52 Gew.-% bis 54,29 Gew.-% wässrige Dispersion aus Vinylacetat und Ethylen
- 9,45 Gew.-% bis 20,96 Gew.-% expandierbaren Graphit, der im Brandfalle bei einer vorgegebenen Temperatur oder in einem vorgegebenen Temperaturbereich, insbesondere zwischen 120 °C und 160 °C, vorzugsweise zwischen 130 °C und 150 °C, expandiert,
- 3,71 Gew.-% bis 24,75 Gew.-% Füllstoff, insbesondere mineralischen Füllstoff
- 0,00 Gew.-% bis 68,32 Gew.-% Zusatz- oder Hilfsstoffe, insbesondere Expansionsförderer zum Fördern der Expansion des Graphits, Homogenisierungsmittel, Weichmacher und/oder Fließverbesserer.

**2.** Brandschutzmasse nach Anspruch 1, bei der als mineralischer Füllstoff Quarz und/oder Glimmer und/oder Aluminiumsilikathydrat (Kaolin), insbesondere zwischen 3,71 Gew.-% und 7,64 Gew.-%.

**3.** Brandschutzmasse nach Anspruch 1 oder Anspruch 2, bei der als Füllstoff eine Glasfrittenmischung, insbesondere zwischen 6,83 Gew.-% und 16,02 Gew.-%, vorgesehen ist, die im Brandfall und/oder im Bereich von ungefähr 600 °C bis 700 °C schmilzt und dadurch vorzugsweise zur Abdichtung und/oder zum Zusammenhalt der Brandschutzmasse beiträgt.

**4.** Brandschutzmasse nach einem der vorhergehenden Ansprüche, umfassend, insbesondere als Fließverbesserer, 0,25 Gew.-% bis 2,34 Gew.-% Aluminiumdistearat.

**5.** Brandschutzmasse nach einem der vorhergehenden Ansprüche, umfassend, insbesondere als Weichmacher und/oder zur Viskositätserhöhung, 0,89 Gew.-% bis 2,47 Gew.-% Natriumsalz in Polyacrylsäure.

**6.** Brandschutzmasse nach einem der vorhergehenden Ansprüche, umfassend, insbesondere als Weichmacher, 1,06 Gew.-% bis 4,65 Gew.-% Diisononyphtalat.

**7.** Brandschutzmasse nach einem der vorhergehenden Ansprüche, umfassend 1,62 Gew.-% bis 3,82 Gew.-% Verstärkungsmittel, insbesondere Glasfasern, und/oder 2,03 Gew.-% bis 4,22 Gew.-% Ammonium, insbesondere als Verhärter.

**8.** Brandschutzmasse nach einem der vorhergehenden Ansprüche, umfassend 1,22 Gew.-% bis 6,84 Gew.-% Cellulose, insbesondere Carboxymethylcellulose, mit Natriumsalz, insbesondere als Verdickungsmittel.

**8.** Brandschutzmasse nach einem der vorhergehenden Ansprüche, umfassend 0,92 Gew.-% bis 4,13 Gew.-% Alkylphenolthoxylat, insbesondere als Homogenisierungsmittel.

**9.** Brandschutzmasse nach einem der vorhergehenden Ansprüche, bei der der expandierbare Graphit in Schwefelsäure gereinigt ist und/oder eine Schwefelsäureeinlage aufweist und/oder bei der der expandierbare Graphit ein Blähgraphit ist.

**10.** Brandschutzmasse nach einem der vorhergehenden Ansprüche, ferner umfassend 6,32 Gew.-% bis 13,68 Gew.-% Diaminphosphat, insbesondere Ethylendiaminphosphat, welches im Brandfalle die Expansion des Graphits fördert oder unterstützt.
